# EUROPÄISCHE PATENTSCHRIFT

(11) **EP 3 749 877 B1**
(45) Veröffentlichungstag und Bekanntmachung des Hinweises auf die Patenterteilung: **07.06.2023**
(21) Anmeldenummer: 19704717.8
(22) Anmeldetag: 05.02.2019
(51) Int. Cl.: F16F 1/373, F16F 3/093, F16F 9/30

(54) **SCHWINGUNGSDÄMPFER**
VIBRATION DAMPER
AMORTISSEUR DE VIBRATIONS

(30) Priorität: 05.02.2018 AT 5002218 U
(43) Veröffentlichungstag der Anmeldung: 16.12.2020
(73) Patentinhaber: Euler-Rolle, Thomas, 1190 Wien (AT)
(72) Erfinder: Euler-Rolle, Thomas, 1190 Wien (AT)
(74) Vertreter: SONN Patentanwälte OG
(86) Internationale Anmeldenummer: PCT/AT2019/060043
(87) Internationale Veröffentlichungsnummer: WO 2019/148231

(56) Entgegenhaltungen:
- EP-A1- 0 055 824
- EP-A2- 0 351 738
- EP-A2- 1 184 211
- WO-A1-2012/079342
- US-A- 4 085 832
- US-A1- 2006 255 516

## Beschreibung

Die vorliegende Erfindung betrifft einen Schwingungsdämpfer, der ein Gehäuse mit einem ersten Gehäuseelement und mit einem zweiten Gehäuseelement, ein erstes Bolzenelement zur Verbindung mit einem ersten Plattenteil und ein zweites Bolzenelement zur Verbindung mit einem zweiten Plattenteil aufweist.

Schwingungsdämpfer sind im Stand der Technik in verschiedensten Ausführungen bekannt, siehe EP 1 184 211 A2, WO 2012/079342 A1, EP 0 055 824 A1, US 4 085 832 A, US 2006/255516 A1 und EP 0 351 738 A2.

Mit Hilfe eines solchen Schwingungsdämpfers können mechanische Schwingungen (Vibrationen, Erschütterungen, Stöße) gedämpft werden. Die bekannten Schwingungsdämpfer bringen jedoch verschiedene Nachteile mit sich. Vielfach müssen unterschiedliche Schwingungsdämpfer für asymmetrische Belastungen vorgesehen werden. Auch die Wärmeabfuhr ist vielfach nicht zufriedenstellend gelöst.

Demnach besteht die Aufgabe der vorliegenden Erfindung darin, zumindest einzelne Nachteile des Standes der Technik zu lindern bzw. zu beseitigen.

Die Erfindung setzt sich zum Ziel, einen gattungsgemäßen Schwingungsdämpfer mit variablen Einsatzmöglichkeiten zu schaffen, welcher insbesondere unterschiedliche Schwingungen auf beiden Seiten aufnehmen kann. Weiters soll die Wärmeabfuhr verbessert werden.

Diese Aufgabe wird durch einen Schwingungsdämpfer mit den Merkmalen von Anspruch 1 gelöst. Bevorzugte Ausführungsformen sind in den abhängigen Ansprüchen angegeben.

Beim erfindungsgemäßen Schwingungsdämpfer sind eine erste Dämpfungseinlage zwischen dem ersten und dem zweiten Bolzenelement, eine zweite Dämpfungseinlage zwischen dem ersten Bolzenelement und dem ersten Gehäuseelement und eine dritte Dämpfungseinlage zwischen dem zweiten Bolzenelement und dem zweiten Gehäuseelement vorgesehen.

Demnach sind zumindest drei Dämpfungseinlagen vorgesehen. Die erste Dämpfungseinlage befindet sich, in Richtung der Längsachsen des ersten und zweiten Bolzenelements gesehen, zwischen dem ersten und zweiten Bolzenelement, wobei die Oberseite der ersten Dämpfungseinlage das erste Bolzenelement und die Unterseite der zweiten Dämpfungseinlage das zweite Bolzenelement kontaktiert. Darüber hinaus ist an der Innenseite des ersten, oberen Gehäuseelements die zweite Dämpfungseinlage und an der Innenseite des zweiten, unteren Gehäuseelements die dritte Dämpfungseinlage vorgesehen.

Für die Zwecke dieser Offenbarung beziehen sich die Orts- und Richtungsangaben, wie "übereinander", "oben", "unten", etc., auf einen Gebrauchszustand des Schwingungsdämpfers mit vertikaler Ausrichtung der Längsachsen des ersten und zweiten Bolzenelements. Selbstverständlich kann der Schwingungsdämpfer auch in einer anderen räumlichen Lage eingesetzt werden, wobei die Orts- und Richtungsangaben dann entsprechend zu übertragen sind.

Vorzugsweise weist das erste und/oder zweite Bolzenelement jeweils einen an der ersten Dämpfungseinlage horizontal anliegenden Bolzenkopf, welcher mit einem aus dem Gehäuse austretenden Gewindezapfen verbunden ist, auf. Hinsichtlich einer leichten, kompakten und fertigungstechnisch günstigen Konstruktion wird das Bolzenelement bevorzugt durch eine Flachkopfschraube gebildet.

Vorteilhafterweise können sich die erste, zweite und/oder dritte Dämpfungseinlage hinsichtlich ihrer Materialeigenschaften und/oder Abmessungen voneinander unterscheiden. Dadurch können einerseits verschieden starke Schwingungen an den Bolzenelementen kompensiert werden. Andererseits können verschiedenartige Lasten, wie Zuglast, Drucklast, Scherlast als auch Torsionslast, aufgenommen werden.

Bei einer Ausführungsvariante sind die Bolzenelemente im Wesentlichen senkrecht zur ersten Dämpfungseinlage angeordnet, welche bevorzugt im Wesentlichen parallel zur zweiten und/oder dritten Dämpfungseinlage angeordnet ist. Die Bolzenelemente stehen bevorzugt in axialer Richtung gesehen aus Durchtrittsöffnungen im Gehäuse in entgegengesetzte Richtungen hervor. Die vorragenden Abschnitte der Bolzenelemente dienen zur Befestigung an zwei Bauteilen, um deren Schwingungen aufnehmen und auf die Dämpfungseinlagen zu übertragen.

Bevorzugt weisen die Bolzenelemente Hülsen auf, welche durch die Durchtrittsöffnungen im Gehäuse ragen. Bei der Montage können die Hülsen als Abstandshalter zwischen dem Schwingungsdämpfer und den Bauteilen ausgebildet sein.

Die zweite und/oder dritte Dämpfungseinlage weist bevorzugt Durchtrittslöcher auf, durch welche die Bolzenelemente in Position gehalten werden. Die Durchtrittslöcher in den Dämpfungseinlagen weisen bevorzugt einen geringeren Durchmesser als die Durchtrittsöffnungen in den Gehäuseelementen auf.

Hinsichtlich einer leichten, kompakten und fertigungstechnisch günstigen Konstruktion weist das Gehäuse, welches die Bolzenelemente und Dämpfungseinlagen zusammenhält und im Inneren aufnimmt, zwei Hälften, nämlich das erste und das zweite Gehäuseelement auf, welche im zusammengebauten Zustand des Schwingungsdämpfers durch geeignete Befestigungselemente, beispielsweise Blindnieten, miteinander verbunden sind.

Bei einer bevorzugten Ausführungsvariante ist die zweite Dämpfungseinlage von der dritten Dämpfungseinlage verschieden. Demnach weist die zweite Dämpfungseinlage bei dieser Ausführungsvariante andere Materialeigenschaften als die dritte Dämpfungseinlage auf, um unterschiedlichen Schwingungen entgegenwirken zu können.

Bevorzugt ist die zweite Dämpfungseinlage härter als die dritte Dämpfungseinlage, weist also eine größere Shore-A-Härte auf. Bei dieser Ausführungsform kann die zweite Dämpfungseinlage beispielsweise für die Kompensation bzw. Reduktion von niederfrequenten Schwingungen und die dritte Dämpfungseinlage für die Kompensation und Reduktion von höherfrequenten Schwingungen eingerichtet sein.

Gemäß einer bevorzugten Ausführungsvariante weist die erste und/oder die zweite und/oder die dritte Dämpfungseinlage ein Gelpad auf.

Erfindungsgemäß weist die erste und/oder die zweite und/oder die dritte Dämpfungseinlage jeweils ein Gelpad und zwei Dämpfungsplatten beidseits des Gelpads auf. Vorteilhafterweise bewirkt das Gelpad zwischen den zwei Dämpfungsplatten zusätzlich zum im Wesentlichen elastischen Verhalten durch die Dämpfungsplatten auch ein viskoelastisches Verhalten. Das Gelpad ist vorzugsweise als Platte ausgebildet.

Vorzugsweise ist das Gelpad aus einem Material mit hochviskosen Eigenschaften gebildet, welche an die Geschwindigkeiten der beteiligten Bauteile je nach Belastungsfall angepasst sein können.

In einer bevorzugten Anordnung sind die Dämpfungsplatten aus einem Synthesekautschuk, insbesondere Acrylnitril-Butadien-Kautschuk (NBR), oder Naturkautschuk oder EPDM (Ethylen-Propylen-Dien-Kautschuk) gebildet. Acrylnitril-Butadien-Kautschuk (NBR) weist neben seiner Elastizität auch ausgezeichnete Quellbeständigkeit gegenüber diversen Schmierölen oder Kraftstoffen wie Diesel oder Benzin auf, welche beim Einsatz des erfindungsgemäßen Schwingungsdämpfers auftreten können.

In einer bevorzugten Ausführungsvariante weist das erste Bolzenelement erste Innenkühlelemente und/oder dass das zweite Bolzenelement zweite Innenkühlelemente auf. Vorteilhafterweise kann so eine bessere Abfuhr und Regulation der durch die Schwingungen entstehenden Reibungswärme erzielt werden.

Bevorzugt weisen das erste und/oder zweite Innenkühlelement jeweils Kühlrippen, zur Vergrößerung der Oberfläche des Innenkühlelements und der daraus resultierenden, verbesserten Wärmeableitung an die Umgebung, auf. Somit kann die entstehende Reibungswärme auf günstige Weise reguliert und abgeführt werden. Die Kühlrippen der Innenkühlelemente weisen bevorzugt U-förmige Ausnehmungen auf, um Bohrungen für Befestigungselemente zwischen den Gehäuseelementen freizustellen.

Zur Wärmeabfuhr hat es sich als vorteilhaft herausgestellt, wenn die ersten Innenkühlelemente und/oder die zweiten Innenkühlelemente vom Außenumfang des Bolzenkopfs des ersten bzw. zweiten Bolzenelements abstehen.

Bei einer besonders bevorzugten Ausführungsform reichen die ersten und/oder zweiten Innenkühlelemente vom Außenumfang des Bolzenkopfs des ersten bzw. zweiten Bolzenelements bis zur Innenseite des Gehäuses. Dadurch wird eine maximale Oberfläche des Innenkühlelements erzielt, wodurch die Wärmeübertragung an die Umgebung optimiert wird.

Bevorzugt weist ein durch die Innenkühlelemente, Dämpfungseinlagen, und die Innenseiten der Gehäuseelemente gebildeter Zwischenraum ein Kühlmedium, beispielsweise eine Flüssigkeit mit viskosen, insbesondere hochviskosen, Eigenschaften auf. Dieses Kühlmedium verbessert einerseits die Wärmeabfuhr und unterstützt andererseits zusätzlich das Dämpfungsverhalten.

Zur verbesserten Abfuhr und Regulation der durch die Schwingungen entstehenden Reibungswärme weist das erste Gehäuseelement nach außen abstehende erste Außenkühlelemente und/oder das zweite Gehäuseelement nach außen abstehende zweite Außenkühlelemente auf. Die Kühlrippen der Außenkühlelemente weisen bevorzugt kreisförmige Ausnehmungen im Bereich von Bohrungen für Befestigungselemente zwischen den Gehäuseelementen auf. Die Ausnehmungen dienen bei dieser Ausführung der einfachen Anbringung der Befestigungselemente.

Bei einer besonders bevorzugten Ausführungsform erstrecken sich die ersten und/oder zweiten Außenkühlelemente im Wesentlichen über den gesamten Außenumfang des Gehäuses.

Vorzugsweise weist das erste Gehäuseelement und das zweite Gehäuseelement, Ausnehmungen für eine Steckverbindung auf, wobei das erste Gehäuseelement erste Außenkühlelemente mit Ausnehmungen und das zweiten Gehäuseelement zweite Außenkühlelemente mit Ausnehmungen aufweisen.

Die Erfindung wird nachstehend anhand eines bevorzugten Ausführungsbeispiels in den Zeichnungen weiter erläutert.
Fig. 1 zeigt einen erfindungsgemäßen Schwingungsdämpfer in Explosionsansicht.
Fig. 2 zeigt den Schwingungsdämpfer gemäß Fig. 1 in Seitenansicht mit einem Halbschnitt entlang der Symmetrieachse.
Fig. 3 zeigt eine erste Dämpfungseinlage des Schwingungsdämpfers der Fig. 1, 2 in Seitenansicht.
Fig. 4A und Fig. 4B zeigt jeweils den Schwingungsdämpfer gemäß Fig. 1, 2 in zusammengesetzter Seitenansicht.
Fig. 5 zeigt eine weitere Ausführungsform des Schwingungsdämpfers mit Innen- und Außenkühlelementen in seitlicher Explosionsansicht.
Fig. 6 zeigt den Schwingungsdämpfer gemäß Fig. 5 in Seitenansicht mit einem Halbschnitt entlang der Symmetrieachse.
Fig. 7 zeigt den Schwingungsdämpfer gemäß Fig. 5, 6 in frontaler Draufsicht.

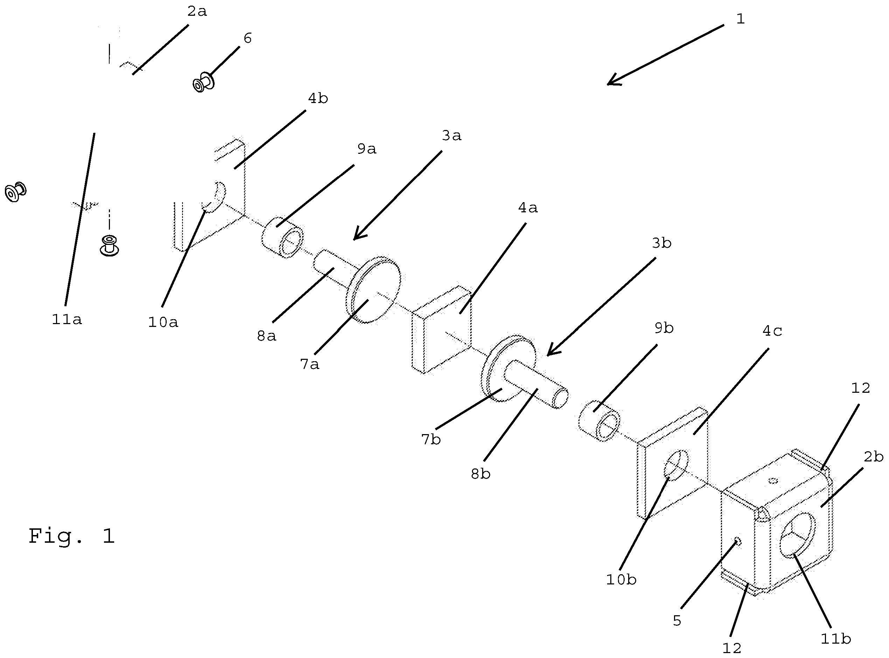

Fig. 1 zeigt einen Schwingungsdämpfer 1, welcher ein Gehäuse mit einem ersten Gehäuseelement 2a und einem zweiten Gehäuseelement 2b, ein erstes Bolzenelement 3a, ein zweites Bolzenelement 3b, eine erste Dämpfungseinlage 4a, eine zweite Dämpfungseinlage 4b und eine dritte Dämpfungseinlage 4c aufweist. Das erste Gehäuseelement 2a und zweite Gehäuseelement 2b weist Bohrungen 5 auf, in welchen Befestigungselemente 6 angeordnet sind, welche die Gehäuseelemente 2a, 2b miteinander verbinden. Die Bolzenelemente 3a, 3b weisen Bolzenköpfe 7a, 7b und Gewindezapfen 8a, 8b auf. Auf den Gewindezapfen 8a, 8b sind Hülsen 9a, 9b angeordnet, welche durch Durchtrittslöcher 10a, 10b in den Dämpfungseinlagen 4b, 4c durchtreten. Die Gehäuseelemente 2a, 2b weisen Durchtrittsöffnungen 11a, 11b auf, durch welche die Gewindezapfen 8a, 8b mit den darauf angeordneten Hülsen 9a, 9b geführt sind, um an zwei Bauteilen (nicht gezeigt) montiert zu werden. Zudem sind Ausnehmungen 12 in den Gehäuseelemente 2a, 2b ersichtlich, über welche die beiden Gehäuseelemente 2a, 2b ineinander gesteckt sind.

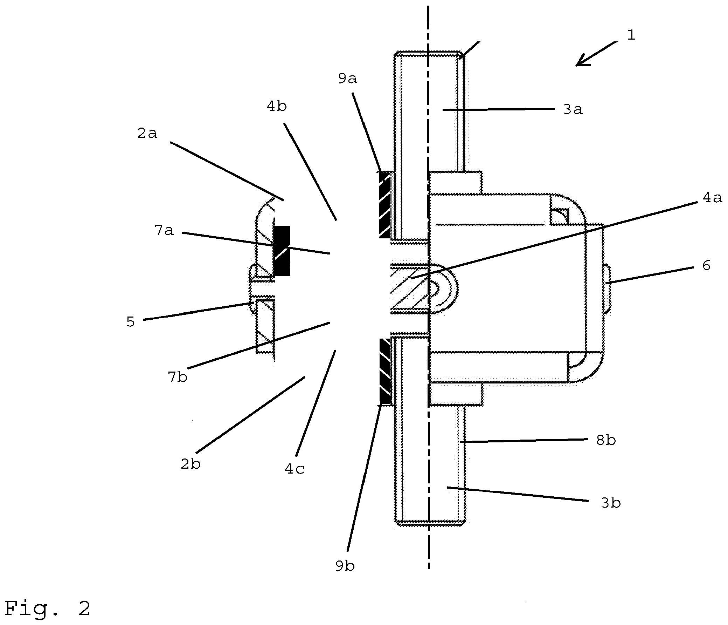

Fig. 2 zeigt den Schwingungsdämpfer 1 mit zusammengesetzten Gehäuseelementen 2a, 2b. Die erste Dämpfungseinlage 4a liegt oberseitig am Bolzenkopf 7a und unterseitig am Bolzenkopf 7b vollflächig an. Die zweite Dämpfungseinlage 4b liegt an der Innenseite des ersten Gehäuseelements 2a vollflächig an. Die dritte Dämpfungseinlage 4c liegt an der Innenseite des zweiten Gehäuseelements 2b vollflächig an.

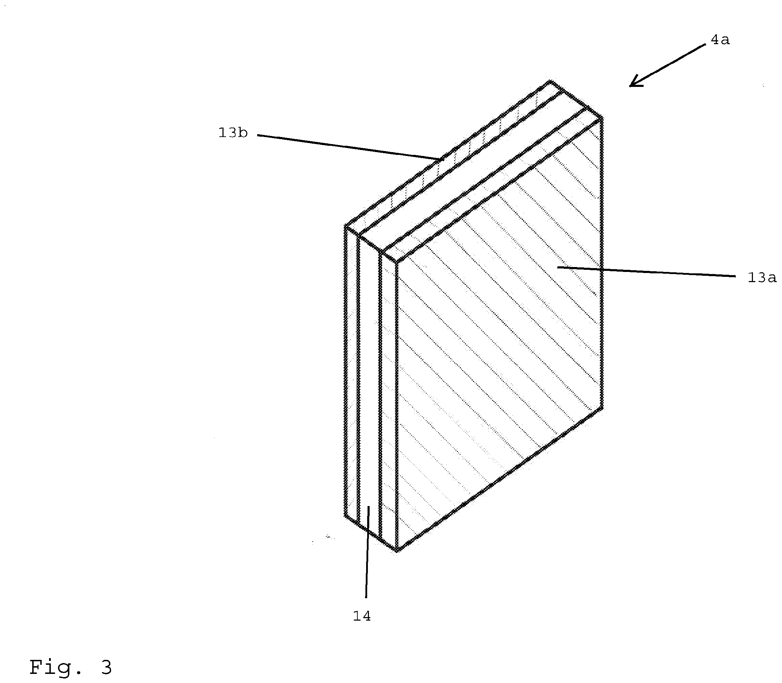

Fig. 3 zeigt eine Ausführung der ersten Dämpfungseinlage 4a, bei welcher zwei Dämpfungsplatten 13a, 13b ein Gelpad 14 dazwischen aufnehmen. Die zweite Dämpfungseinlage 4b und die dritte Dämpfungseinlage 4c können entsprechend aufgebaut sein (nicht gezeigt) .

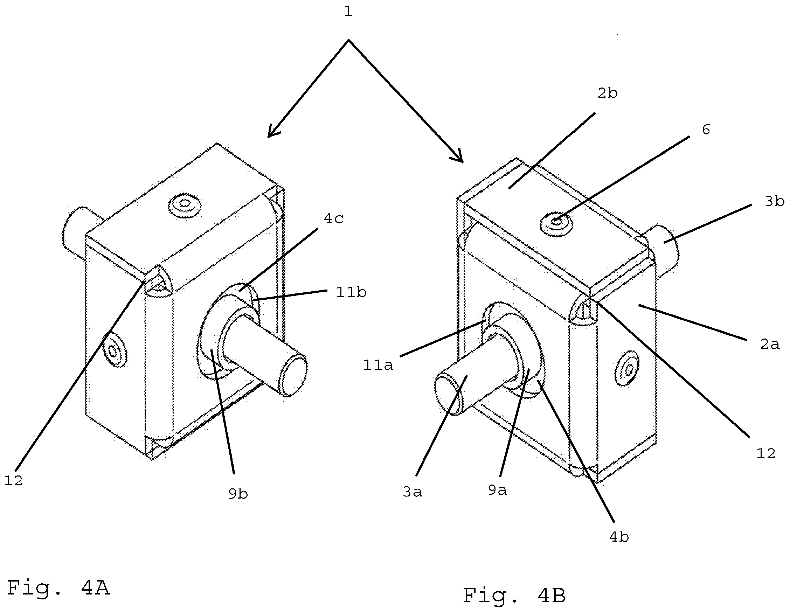

Fig. 4a und Fig. 4b zeigen jeweils den Schwingungsdämpfer 1 mit den im Bereich der Ausnehmungen 12 ineinander gesteckten Gehäuseelementen 2a, 2b, welche durch die Befestigungselemente 6 miteinander verbunden sind.

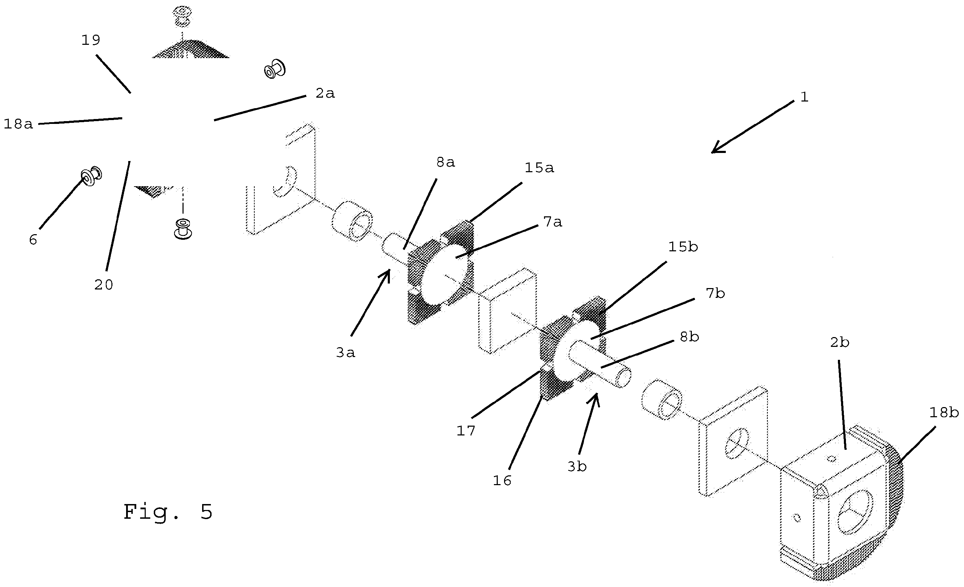

Fig. 5 zeigt eine Ausführung des Schwingungsdämpfers 1, bei welcher das erste Bolzenelement 3a und zweite Bolzenelement 3b entlang des Außenumfanges des ersten 7a bzw. des zweiten Bolzenkopfes 7b erste 15a bzw. zweite Innenkühlelemente 15b aufweist. Die Innenkühlelemente 15a, 15b sind durch Kühlrippen 16 gebildet. In der gezeigten Ausführung weisen die Innenkühlelemente 15a, 15b Ausnehmungen 17 im Bereich der Bohrungen 5 auf. Das erste Gehäuseelement 2a und das zweite Gehäuseelement 2b weisen nach außen abstehende erste Außenkühlelemente 18a und nach außen abstehende zweite Außenkühlelemente 18b auf. Die Außenkühlelemente 18a, 18b weisen Kühlrippen 19 auf, welche im Bereich der Bohrungen 5 der Gehäuseelemente 2a, 2b Ausnehmungen 20 aufweisen. In den Ausnehmungen 20 sind im zusammengesteckten Zustand der Gehäuseelemente 2a, 2b die Befestigungselemente 6 angeordnet.

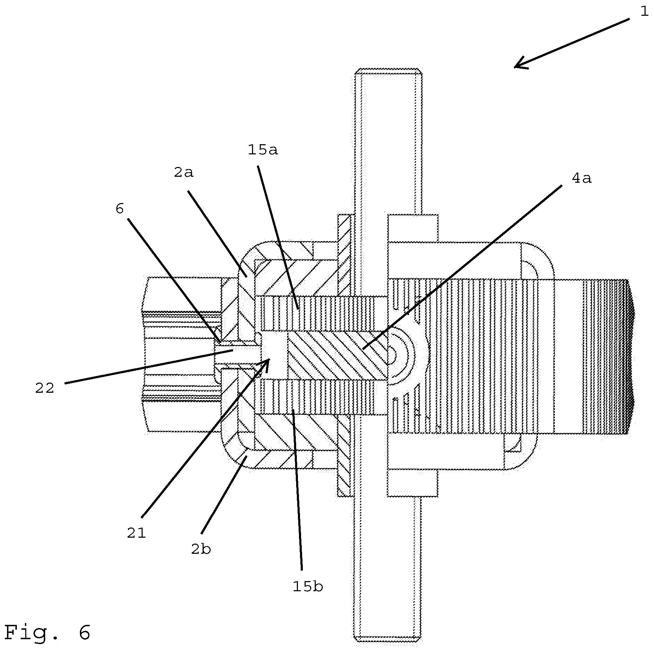

Fig. 6 zeigt den Schwingungsdämpfer 1 der Fig. 5 mit dem ersten 15a und zweiten Innenkühlelement 15b, welche am Außenumfang der Bolzenköpfe 7a, 7b der Bolzenelemente 3a, 3b angeordnet sind.

Die Innenkühlelement 15a, 15b reichen bis zur Innenseite der Gehäuseelemente 2a, 2b. Durch die Innenkühlelemente 15a, 15b, die Dämpfungseinlagen 4a, 4b, 4c, den Befestigungselementen 6 und den Innenwänden der Gehäuseelementen 2a, 2b ist ein Zwischenraum 21 gebildet. Der Zwischenraum 21 enthält ein Kühlmedium 22.

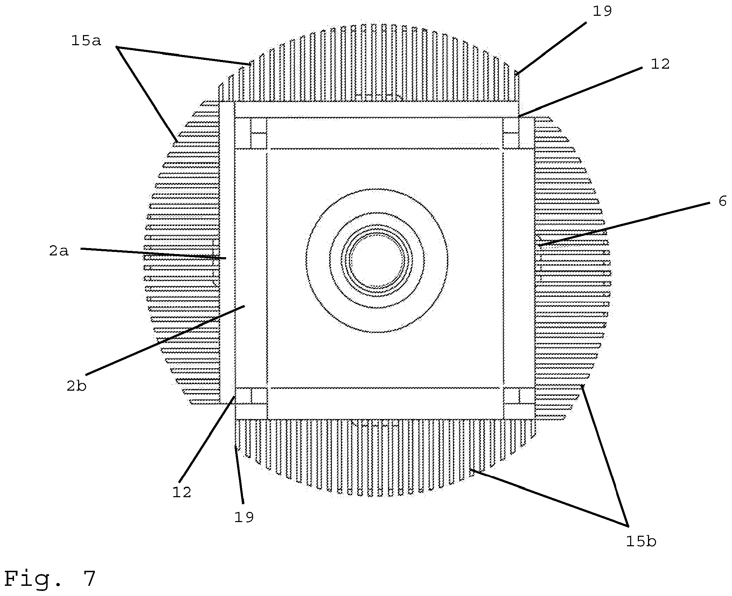

Wie aus Fig. 7 ersichtlich, weist der Schwingungsdämpfer 1 in den Ausnehmungen 20 ineinander gesteckte Gehäuseelementen 2a, 2b auf, wobei die ersten Außenkühlelemente 15a mit den Kühlrippen 19 am ersten Gehäuseelement 2a und die zweiten Außenkühlelemente 15b mit den Kühlrippen 19 am zweiten Gehäuseelement 2b angeordnet sind und sich die Außenkühlelemente 15a, 15b im Wesentlichen über den gesamten Außenumfang des aus den Gehäuseelementen 2a, 2b gebildeten Gehäuses erstrecken.

## Patentansprüche

1. Schwingungsdämpfer (1) aufweisend
- ein Gehäuse mit einem ersten Gehäuseelement (2a) und mit einem zweiten Gehäuseelement (2b),
- ein erstes Bolzenelement (3a) zur Verbindung mit einem ersten Plattenteil,
- ein zweites Bolzenelement (3b) zur Verbindung mit einem zweiten Plattenteil,
- eine erste Dämpfungseinlage (4a) zwischen dem ersten (3a) und zweiten Bolzenelement (3b),
- eine zweite Dämpfungseinlage (4b) zwischen dem ersten Bolzenelement (3a) und dem ersten Gehäuseelement (2a) und
- eine dritte Dämpfungseinlage (4c) zwischen dem zweiten Bolzenelement (3b) und dem zweiten Gehäuseelement (2b), **dadurch gekennzeichnet,**
- **dass** die erste (4a) und/oder die zweite (4b) und/oder die dritte Dämpfungseinlage (4c) jeweils ein Gelpad (14) und zwei Dämpfungsplatten (13a, 13b) beidseits des Gelpads (14) aufweist.

2. Schwingungsdämpfer (1) nach Anspruch 1, **dadurch gekennzeichnet, dass** die zweite Dämpfungseinlage (4b) von der dritten Dämpfungseinlage (4c) verschieden ist.

3. Schwingungsdämpfer (1) nach Anspruch 2, **dadurch gekennzeichnet, dass** die zweite Dämpfungseinlage (4b) härter als die dritte Dämpfungseinlage (4c) ist.

4. Schwingungsdämpfer (1) nach einem der Ansprüche 1 bis 3, **dadurch gekennzeichnet, dass** das Gelpad (14) hochviskose Materialeigenschaften aufweist.

5. Schwingungsdämpfer (1) nach einem der Ansprüche 1 bis 4, **dadurch gekennzeichnet, dass** die Dämpfungsplatten (13a, 13b) aus einem Synthesekautschuk, insbesondere AcrylnitrilButadien-Kautschuk (NBR), oder Naturkautschuk oder EPDM (Ethylen-Propylen-Dien-Kautschuk) gebildet sind.

6. Schwingungsdämpfer (1) nach einem der Ansprüche 1 bis 5, **dadurch gekennzeichnet, dass** das erste Bolzenelement (3a) erste Innenkühlelemente (15a) und/oder dass das zweite Bolzenelement (3b) zweite Innenkühlelemente (15b) aufweist.

7. Schwingungsdämpfer (1) nach Anspruch 6, **dadurch gekennzeichnet, dass** als erste (15a) und/oder zweite Innenkühlelemente (15b) jeweils Kühlrippen (16) vorgesehen sind.

8. Schwingungsdämpfer (1) nach einem der Ansprüche 1 bis 7, **dadurch gekennzeichnet, dass** das erste (3a) und/oder zweite Bolzenelement (3b) jeweils einen an der ersten Dämpfungseinlage (4a) anliegenden Bolzenkopf (7a, 7b) aufweist.

9. Schwingungsdämpfer (1) nach Anspruch 8, **dadurch gekennzeichnet, dass** die ersten Innenkühlelemente (15a) und/oder die zweiten Innenkühlelemente (15b) vom Außenumfang des Bolzenkopfs (7a, 7b) des ersten (3a) bzw. zweiten Bolzenelements (3b) abstehen.

10. Schwingungsdämpfer (1) nach Anspruch 9 **dadurch gekennzeichnet, dass** die ersten Innenkühlelemente (15a) vom Außenumfang des Bolzenkopfs (7a, 7b) des ersten (3a) bzw. zweiten Bolzenelements (3b) bis zur Innenseite des Gehäuses reichen.

11. Schwingungsdämpfer (1) nach einem der Ansprüche 1 bis 10, **dadurch gekennzeichnet, dass** das erste Gehäuseelement (2a) nach außen abstehende erste Außenkühlelemente (18a) und/oder dass das zweite Gehäuseelement (2b) nach außen abstehende zweite Außenkühlelemente (18b) aufweist.

12. Schwingungsdämpfer (1) nach Anspruch 11, **dadurch gekennzeichnet, dass** sich die ersten (18a) und/oder zweiten Au-ßenkühlelemente (18b) im Wesentlichen über den gesamten Außenumfang des Gehäuses erstrecken.

13. Schwingungsdämpfer (1) nach Anspruch 11 oder 12, **dadurch gekennzeichnet, dass** das erste Gehäuseelement (2a) und das zweite Gehäuseelement (2b) ineinander gesteckt sind, wobei sich die ersten Außenkühlelemente (18a) am ersten Gehäuseelement (2a) und die zweiten Außenkühlelemente (18b) am zweiten Gehäuseelement (2b) befinden.

## Claims

1. A vibration damper (1), comprising
- a housing, which has a first housing element (2a) and a second housing element (2b),
- a first pin element (3a) for connection to a first plate part,
- a second pin element (3b) for connection to a second plate part,
- a first damping insert (4a) between the first pin element (3a) and the second pin element (3b),
- a second damping insert (4b) between the first pin element (3a) and the first housing element (2a), and
- a third damping insert (4c) between the second pin element (3b) and the second housing element (2b), **characterised in that**
- the first damping insert (4a) and/or the second damping insert (4b) and/or the third damping insert (4c) each comprise a gel pad (14) and two damping plates (13a, 13b) on either side of the gel pad (14).

2. The vibration damper (1) according to Claim 1, **characterised in that** the second damping insert (4b) is different from the third damping insert (4c).

3. The vibration damper (1) according to Claim 2, **characterised in that** the second damping insert (4b) is harder than the third damping insert (4c).

4. The vibration damper (1) according to any one of Claims 1 to 3, **characterised in that** the gel pad (14) comprises highly viscous material properties.

5. The vibration damper (1) according to any one of Claims 1 to 4, **characterised in that** the damping plates (13a, 13b) are formed from a synthetic rubber, in particular acrylonitrile-butadiene rubber (NBR), or natural rubber or EPDM (ethylene-propylene-diene rubber).

6. The vibration damper (1) according to any one of Claims 1 to 5, **characterised in that** the first pin element (3a) comprises first inner cooling elements (15a) and/or the second pin element (3b) comprises second inner cooling elements (15b) .

7. The vibration damper (1) according to Claim 6, **characterised in that** cooling fins (16) are provided in each case as the first inner cooling elements (15a) and/or second inner cooling elements (15b).

8. The vibration damper (1) according to any one of Claims 1 to 7, **characterised in that** the first pin element (3a) and/or second pin element (3b) each comprise a pin head (7a, 7b) which bears against the first damping insert (4a).

9. The vibration damper (1) according to Claim 8, **characterised in that** the first inner cooling elements (15a) and/or the second inner cooling elements (15b) protrude from the outer circumference of the pin head (7a, 7b) of the first pin element (3a) and second pin element (3b), respectively.

10. The vibration damper (1) according to Claim 9, **characterised in that** the first inner cooling elements (15a) extend from the outer circumference of the pin head (7a, 7b) of the first pin element (3a) and second pin element (3b), respectively, to the inside of the housing.

11. The vibration damper (1) according to any one of Claims 1 to 10, **characterised in that** the first housing element (2a) comprises outwardly protruding first outer cooling elements (18a) and/or the second housing element (2b) comprises outwardly protruding second outer cooling elements (18b).

12. The vibration damper (1) according to Claim 11, **characterised in that** the first outer cooling elements (18a) and/or second outer cooling elements (18b) extend substantially over the entire outer circumference of the housing.

13. The vibration damper (1) according to Claim 11 or 12, **characterised in that** the first housing element (2a) and the second housing element (2b) are plugged into each other, wherein the first outer cooling elements (18a) are situated on the first housing element (2a) and the second outer cooling elements (18b) are situated on the second housing element (2b).

## Revendications

1. Amortisseur de vibrations (1) présentant
- un carter avec un premier élément de carter (2a) et avec un deuxième élément de carter (2b),
- un premier élément de boulon (3a) pour la liaison à une première partie de plaque,
- un deuxième élément de boulon (3b) pour la liaison à une deuxième partie de plaque,
- un premier insert d'amortissement (4a) entre le premier (3a) et deuxième élément de boulon (3b),
- un deuxième insert d'amortissement (4b) entre le premier élément de boulon (3a) et le premier élément de carter (2a) et
- un troisième insert d'amortissement (4c) entre le deuxième élément de boulon (3b) et le deuxième élément de carter (2b), **caractérisé en ce que**
- le premier (4a) et/ou le deuxième (4b) et/ou le troisième insert d'amortissement (4c) présente respectivement un coussinet de gel (14) et deux plaques d'amortissement (13a, 13b) de part et d'autre du coussinet de gel (14).

2. Amortisseur de vibrations (1) selon la revendication 1, **caractérisé en ce que** le deuxième insert d'amortissement (4b) est différent du troisième insert d'amortissement (4c).

3. Amortisseur de vibrations (1) selon la revendication 2, **caractérisé en ce que** le deuxième insert d'amortissement (4b) est plus dur que le troisième insert d'amortissement (4c).

4. Amortisseur de vibrations (1) selon l'une quelconque des revendications 1 à 3, **caractérisé en ce que** le coussinet de gel (14) présente des propriétés de matériau très visqueuses.

5. Amortisseur de vibrations (1) selon l'une quelconque des revendications 1 à 4, **caractérisé en ce que** les plaques d'amortissement (13a, 13b) sont formées à partir d'un caoutchouc synthétique, en particulier caoutchouc acrylonitrile-butadiène (NBR), ou caoutchouc naturel ou EPDM (caoutchouc éthylène-propylène-diène).

6. Amortisseur de vibrations (1) selon l'une quelconque des revendications 1 à 5, **caractérisé en ce que** le premier élément de boulon (3a) présente des premiers éléments de refroidissement intérieurs (15a) et/ou que le deuxième élément de boulon (3b) présente des deuxièmes éléments de refroidissement intérieurs (15b).

7. Amortisseur de vibrations (1) selon la revendication 6, **caractérisé en ce que** respectivement des nervures de refroidissement (16) sont prévues en tant que premiers (15a) et/ou deuxièmes éléments de refroidissement intérieurs (15b).

8. Amortisseur de vibrations (1) selon l'une quelconque des revendications 1 à 7, **caractérisé en ce que** le premier (3a) et/ou deuxième élément de boulon (3b) présente respectivement une tête de boulon (7a, 7b) s'appliquant contre le premier insert d'amortissement (4a).

9. Amortisseur de vibrations (1) selon la revendication 8, **caractérisé en ce que** les premiers éléments de refroidissement intérieurs (15a) et/ou les deuxièmes éléments de refroidissement intérieurs (15b) font saillie de la périphérie extérieure de la tête de boulon (7a, 7b) du premier (3a) ou deuxième élément de boulon (3b).

10. Amortisseur de vibrations (1) selon la revendication 9, **caractérisé en ce que** les premiers éléments de refroidissement intérieurs (15a) vont de la périphérie extérieure de la tête de boulon (7a, 7b) du premier (3a) ou deuxième élément de boulon (3b) jusqu'à la face intérieure du carter.

11. Amortisseur de vibrations (1) selon l'une quelconque des revendications 1 à 10, **caractérisé en ce que** le premier élément de carter (2a) présente des premiers éléments de refroidissement extérieurs (18a) faisant saillie vers l'extérieur et/ou que le deuxième élément de carter (2b) présente des deuxièmes éléments de refroidissement extérieurs (18b) faisant saillie vers l'extérieur.

12. Amortisseur de vibrations (1) selon la revendication 11, **caractérisé en ce que** les premiers (18a) et/ou deuxièmes éléments de refroidissement extérieurs (18b) s'étendent sensiblement sur toute la périphérie extérieure du carter.

13. Amortisseur de vibrations (1) selon la revendication 11 ou 12, **caractérisé en ce que** le premier élément de carter (2a) et le deuxième élément de carter (2b) sont emboîtés l'un dans l'autre, dans lequel les premiers éléments de refroidissement extérieurs (18a) se trouvent sur le premier élément de carter (2a) et les deuxièmes éléments de refroidissement extérieurs (18b) sur le deuxième élément de carter (2b).
